# EUROPEAN PATENT APPLICATION

(11) **EP 1 367 734 A1**
(43) Date of publication of application: **03.12.2003**
(21) Application number: 02729581.5
(22) Date of filing: 15.01.2002
(51) Int. Cl.: H04B 1/16, H04N 7/173, H04N 5/44, H04Q 7/38

(54) **RECEIVER APPARATUS, MOBILE TERMINAL, AND RECEIVING SYSTEM**

(30) Priority: 16.01.2001 JP 2001007960
(71) Applicant: MATSUSHITA ELECTRIC INDUSTRIAL CO., LTD., Kadoma-shi, Osaka 571-0050 (JP)
(72) Inventor: YAMAMOTO, Kakuya, Neyagawa-shi, Osaka 572-0825 (JP)
(74) Representative: Dempster, Benjamin John Naftel
(86) International application number: JP0200209
(87) International publication number: WO02056486

(57) **Abstract**

A receiving system for the purpose of making it possible to receive radio wave broadcast with high sensitivity irrespective of the location of a portable terminal, and comprising a receiver and a portable terminal. If command means of the portable terminal issues a specific command, control means of the receiver at least selects a signal which communication means sends on the basis of that command information. Furthermore, conversion means of the receiver converts information of a specific form into information of another specific form adapted for reproduction at the portable terminal. Hereby, the portable terminal can receive from the receiver information adapted for the portable terminal and reproduce the information.

## Description

### Technical Field

The present invention relates to a system for receiving and reproducing radio wave broadcast.

### Background Art

In recent years, a technology for receiving and reproducing radio wave broadcast by portable terminals having a communication function such as portable phone etc. has been proposed.

That is, a television program broadcast with radio wave are received via antenna of a portable terminal. And the television program etc. thus received are displayed on a liquid display or the like.

However, the prior art technology has a shortcoming that radio wave broadcast can not be received with a high sensitivity in some places where the portable terminal is. Needless to say, this problem can be solved if the place where the portable terminal is used is limited. But if such a restriction is imposed, that could jeopardize the advantage that the portable terminal can be used anywhere.

Meanwhile, a simple receiving system made up of a receiver that can receive television broadcast and a monitor connected with this receiver through a wireless communication is marketed. This simple receiving system seems to solve the above problem.

However, with the simple receiving system, it is assumed that the television broadcast is watched on a monitor having characteristics like a specific resolution. That is, it is not assumed that television broadcast is watched on a portable terminal having unspecified characteristics. Therefore, even if a portable terminal that can communicate with the receiver adopted in the simple receiving system, the following problem arises if the resolution of the monitor of this portable terminal is different from that of the monitor adopted by the simple receiving system.

That is, the problem is that if a broadcast is reproduced by a monitor higher than the monitor used in the simple receiving system in resolution, the moving picture quality will drop. If, on the other hand, a broadcast is reproduced by a monitor lower than a monitor used in the simple receiving system in resolution, a moving picture within a certain scope alone can be reproduced and furthermore faulty reproduction can occur and the reproduction can not be made.

But in a state where it is known in advance that broadcast is to be reproduced with a low resolution monitor, a small moving picture with small data size according to that must be used. That is, if reproduction is made with a monitor with resolution lower than that of the monitor adopted in the simple receiving system, another problem arises that the data size of a moving picture, an object to be reproduced, will be larger than the data size required intrinsically.

The present invention has been proposed in view of the above circumstances, and it is an object of the present invention to make it possible to reproduce a broadcast program irrespective of the location of this portable terminal even if unspecific portable terminals having unspecified characteristics are adopted.

### Disclosure of Invention

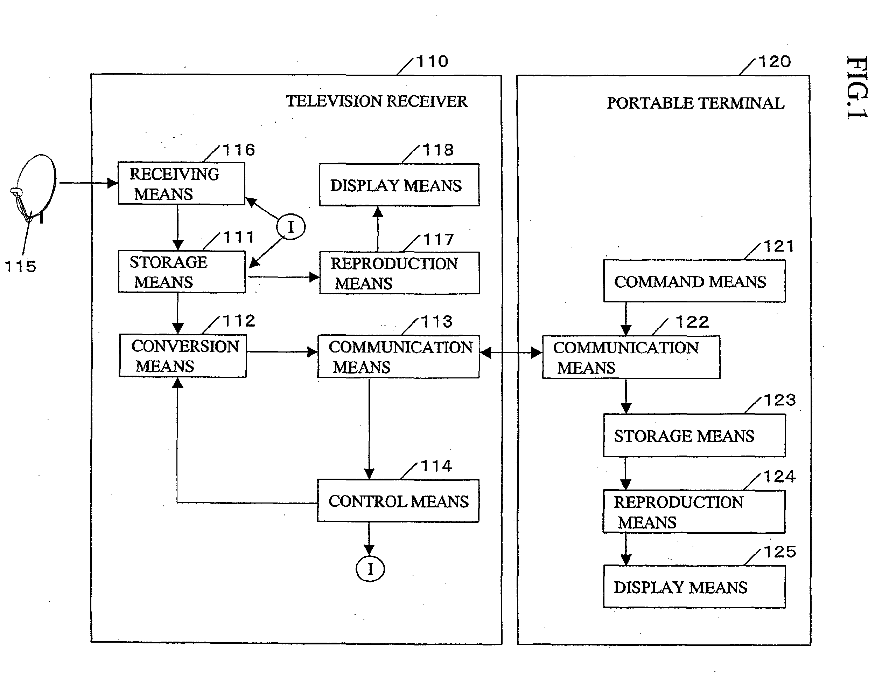

To achieve the foregoing object, the present invention is based on a receiver system made up of television receiver 110 and portable terminal 120 as shown in FIG. 1.

The television receiver 110 is provided with the following means.

That is, conversion means 112 converts a signal of a specific form into a signal of another specific form (the expression "signal" used herein means moving picture information and/or sound information, multimedia information and monomedia information by data broadcasting, program information such as script, and mixed information of them). Communication means 113 sends signals converted by conversion means 112 to portable terminal 120 and receives a command signal from portable terminal 120. Furthermore, control means 114 at least selects signals sent from the communication means 113 on the basis of a command signal received by the communication means 113 from portable terminal 120.

Meanwhile, the portable terminal 120 has the following means,

That is, command means 121 issues a specific command. Furthermore, communication means 122 sends command signals from command means 121 to the receiver and receives signals from receiver 110. In addition, display means 125 displays the signal reproduced by said reproduction means 124.

Here, the receiver 110 is installed at a place where radio wave broadcast can be received with high sensitivity. This way, the radio wave broadcast can be received with high sensitivity irrespective of the location of the portable terminal 120.

Meanwhile, if conversion means 112 in the receiver 110 is limited to one conversion method, some problem arises, that is, the moving picture quality decreases because of difference in resolution of display means 125 that portable terminal 120 has. Therefore, the present invention is so configured that communication means 113 in receiver 110 receives from portable terminal 120 terminal information on the characteristics or state of portable terminal 120, and the conversion means 112 effects conversions according to the terminal information.

It is noted that the above-mentioned terminal information indicates at least one out of the following: the resolution of display means 125 of portable terminal 120, total capacity of storage means 123 in portable terminal 120 and available capacity of storage means 123 in portable terminal 120, the number of colors to be displayed by display means 125 in the portable terminal and data format adapted for the portable terminal.

### Brief Description of Drawings

FIG. 1 is a block diagram of a television receiving system to which the present invention is applied.
FIG. 2 is a flow chart explaining the operation of the television receiver to which the present invention is applied.
FIG. 3 is a flow chart explaining the operation of the portable terminal to which the present invention is applied.
FIG. 4 is a block diagram of the prior art portable terminals

### Best Mode for Carrying out the Invention

FIG. 1 is a block diagram of a television receiver system to which the present invention is applied.

The present television receiver is formed of television receiver 110 and portable terminal 120. Now operation on the television receiver 110 side will be explained. This television receiver 110 is installed in a place where radio wave broadcast (in this case, BS digital broadcast) can be received with high sensitivity.

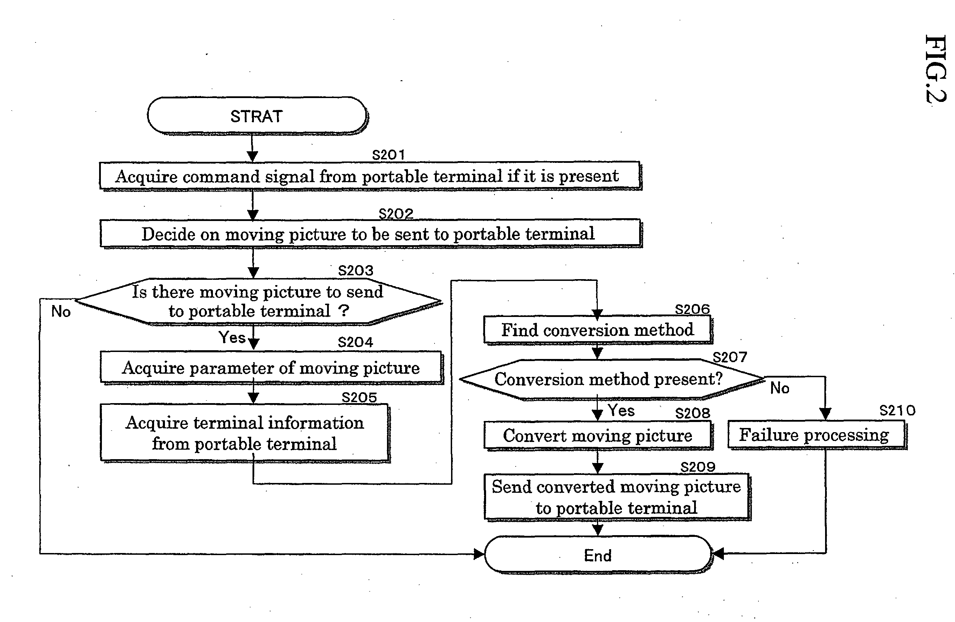

First, if communication means 113 in television receiver 110 receives a command signal from portable terminal 120 (FIG. 2, Step S 201), control means 114 controls conversion means 112 or receiving means 116 on the basis of the command signal.

The expression "command signal" as used herein means any kind of command signal issued from portable terminal 120 to television receiver 110. To be specific, the command signals include "terminal information," "communication path information," "information to specify a program" etc. which will be described later.

Receiving means 116 selects a radio wave for an object channel from the radio waves received via antenna 115 and inputs it in storage means 111 such as hard disk as MPEG 2 format signal. Hereby, a plurality of data are stored in storage means 111 and, therefore, on the basis of command signals received as above, control means 114 decides on a specific moving picture data or audio data among the plurality of data (hereinafter these shall be merely referred to "moving picture A") in a technique which will be described later (FIG. 2, Step S 202).

It is noted that necessary information for deciding on the above moving picture A may be set in advance from operating means (not shown) of television receiver 110. Under this arrangement, even if no command signal from portable terminal 120 is present or even if it is impossible to decide on moving picture A from this command signal alone, control means 114 can decide on moving picture A by the above operating means on the basis of setting information.

Then, control means 114 judges whether moving picture A decided as above is stored in storage means 111 or not (FIG. 2, Step S 203). If it is judged that the moving picture is not stored, processing ends. Needless to say, arrangements may be so made that before processing ends, portable terminal 120 is informed that the specified moving picture A is not stored.

Meanwhile, control means 114, which judges that moving picture A is stored in storage means 111, acquires a parameter from this moving picture A (FIG. 2, Step S 204).

The above mentioned parameter is information on moving picture A, such as, for example, moving picture resolution, number of frames per second, compression ratio, capacity and time. Here, it is assumed that a one-hour television program by BS digital broadcast is received by MPEG 2 format signal. The moving picture resolution of moving picture A is 720 x 480, number of frames per second is 30 frames/sec., the picture quality is high picture quality (low compression ratio), and capacity is 2.0 GB.

Then, control means 114 acquires terminal information from portable terminal 120 via communication means 113 (FIG. 2, Step S 205), and gives this terminal information to conversion means 112.

The term "terminal information" as used herein means information on the characteristics or state about portable terminal 120 such as, for example, resolution of display means 125 (for example, display) of portable terminal 120, total capacity or available capacity of storage means 123 (for example, hard disk) of portable terminal 120, furthermore, number of colors to be displayed by display means 125 of portable terminal 120, data format (for example, MPEG 4) adapted for portable terminal 120, type of portable terminal 120 etc.

In the following, an example will be explained where the resolution of display means 125 is 180 x 120 pixels, and conversion means 112 receives from control means 114 terminal information showing that the available capacity of the storage means 123 is 32 MB.

First, conversion means 112 acquires a method of converting moving picture A according to terminal information (FIG. 2, Step S206). As mentioned above, the capacity of moving picture A is 2.0 GB, while the available capacity of storage means 123 that portable terminal 120 has is 32 MB. If, therefore, moving picture A is sent to portable terminal 120 without being converted, the moving picture can not be normally stored in storage means 123 that portable terminal 120 has.

In such a case, therefore, "a method of converting to moving picture resolution 180 x 120 pixels, number of frames per second 3 frames/sec., low picture quality (high compression ratio), capacity 30 MB" for example is adopted as a method of converting moving picture A. That is, conversion means 112 in this case is to find a method of converting the capacity of moving picture A into not higher than available capacity (that is, 32 MB) by adjusting the number of frames per second and picture quality (compression ratio).

If, on the other hand, no suitable method is found, specific failure processing is done as informing portable terminal 120 to the effect (FIG. 2, Steps S 207→ S 210).

Finally, conversion means 112 converts moving picture A into moving picture B by the method found above, and further converts this moving picture B in a format adapted for portable terminal 120 such as MPEG 4 format (FIG. 2, Step S 208).

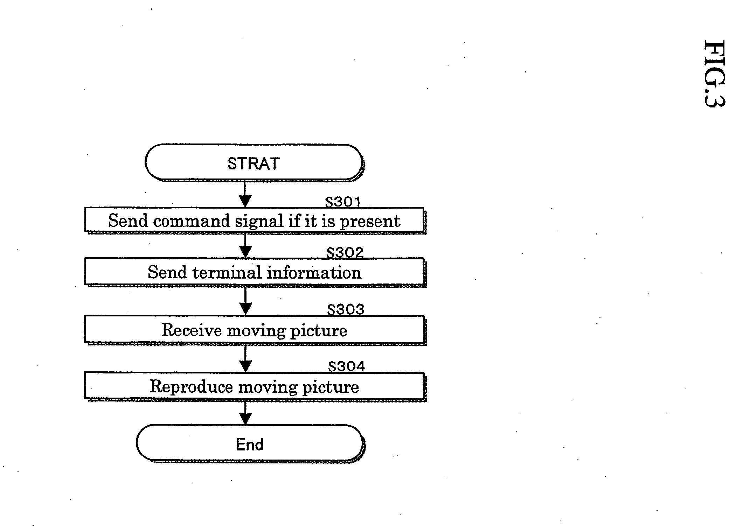

If, as mentioned above, moving picture A of a specific form is converted into moving picture B of another specific form, this moving picture B is to be sent to portable terminal 120 via communication means 113 (FIG. 2, Step S 209). Needless to say, conversion of "form" includes not only conversion of format, but also the number of frames per second etc. Now, the operation on the side of portable terminal 120 will be explained with reference to FIG. 3.

First, if information (time, channel etc., for example) to specify a program is inputted using buttons or the like that portable terminal 120 has, then command means 121, which accepts this input signal, instructs television receiver 110 via communication means 122 to send the program (FIG. 3, Step S 301).

That is, through that operation, a command signal is sent from portable terminal 120 to television receiver 110. The term "command signal" as used herein is not limited to only information to specify a program as mentioned above. For example, a signal to control to power on/off television receiver 110 is included in the above-mentioned command signal.

Then, command means 121 sends to television receiver 110 terminal information held in advance via television receiver 110 (FIG. 3, Step S 302). Needless to say, the present invention is not limited to the form that command means 121 holds terminal information. For example, the same results can be obtained if terminal information is held in terminal information holding means (not shown) in advance and command means 121 refers to the contents in this terminal information holding means.

After that, moving picture B converted into a format adaptable to this portable terminal 120 is received from television receiver 110 (FIG. 3, Step S 303), then this moving picture B is stored into storage means 123. And moving picture B thus stored is reproduced by reproduction means 124, and displayed by display means 125 such as liquid crystal display (FIG. 3, Step S 304).

As described, this invention is so configured that television receiver 110 is interposed, and therefore radio wave broadcast can be received with high sensitivity irrespective of the location of portable terminal 120.

It is also noted that the present invention is so configured that conversion is effected according to terminal information, and therefore there arises no problem that it is only specific portable terminal 120 having specific characteristics that can be adopted. There arise no problems, either, that moving pictures can not be normally stored in storage means 123 that portable terminal 120 has and that the moving picture quality deteriorates because of the difference in resolution of display means 125 that portable terminal 120 has.

In the above description, after a command signal is acquired (FIG. 2, Step S 201), terminal information is acquired (FIG. 2, Step S 205). But the same results can be obtained as long as the step of acquiring this terminal information (FIG. 2, Step S 205) is placed before the finding of conversion method (Step S 206). For example, if not only the command signal but also terminal information are acquired in Step S 201, one communication between television receiver 110 and portable terminal 120 will do, thus improving processing efficiency.

Furthermore, between communication means 113 of television receiver 110 and communication means 122 of portable terminal 120, processing related to copyright protection and charging fee may be performed. By so doing, contents having copyrights by rights can be handled by the present invention.

In the above description, furthermore, hard disk is exemplified as storage means 111 of television receiver 110 and storage means 123 of portable terminal 120. These storage means 111 and 123 may be any means if moving picture or audio data can be stored. For example, the same results can be obtained by means that can be removed from television receiver 110 or portable terminal 120 as semiconductor cards like SD card. In this case, needless to say, the television receiver 110 side/the portable terminal 120 side should be provided with SD card slot.

Furthermore, any communication means 113 of television receiver 110 and communication means 122 of portable terminal 120 will do as long as they are means that permit at least giving and receiving of information, and their concrete forms are not restrictive in particular.

For example, a semiconductor card like SD card may be moved between television receiver 110 and portable terminal 120. By so doing, the same results can be obtained even if special communication means are not provided as long as the terminal is one provided with an SD card slot.

Or, the function of giving and receiving information and function of command means 121 may be held by a charger of portable terminal 120. In this arrangement, if portable terminal 120 is set in the charger, this portable terminal 120 automatically communicates with television receiver 110 by power line for charging, other communication circuit or wireless, and therefore that eliminates the need for the user to operate for communication by using buttons etc. provided on portable terminal 120 as mentioned above.

Furthermore, the method of sending terminal information from portable terminal 120 to television receiver 110 is not limited to the above-mentioned method. For example, arrangements are so made that a table in which the values terminal information can assume are related to (numerical strings) are held in advance on the side of television receiver 110, and the code is sent from portable terminal 120 instead of the values of terminal information. And in television receiver 110, the values of terminal information are obtained from the above-mentioned related table on the basis of the codes received. Through this, the quantity of communication can be reduced. In addition, processing for deciding on a method of converting moving pictures in television receiver 110 is simplified.

In the above description, furthermore, television broadcast is received via antenna 115. The form of broadcasting may be wireless broadcasting such as broadcasting satellite, ground broadcasting, wire broadcasting such as cable television broadcasting, or broadcasting using public circuit or LAN (Local Area Network). Needless to say, the form of broadcasting also may be broadcasting using the Internet.

Furthermore, the television receiver 110 may be home server or server outside home that controls moving picture or audio data in a unified manner. Needless to say, the television receiver 110 may be provided with reproduction means 117 to reproduce moving pictures A stored in the storage means 111 and display means 118 to display moving pictures A reproduced by the reproduction means 117.

In the above description, furthermore, a configuration in which television receiver 110 and portable terminal 120 are both exemplified, but the present invention is not limited to this. That is, in a state where received signal is not stored but may be immediately reproduced, the storage means 111 and 123 are not needed.

In the above description, furthermore, only programs specified by a user of portable terminal 120 is stored in storage means 111 of television receiver 110, but the present invention is not limited to that. That is, the invention may be so configured that the whole or part of a program to be broadcast is automatically stored in storage means 111 of television receiver 110 (in addition, in storage means 123 of portable terminal 120 via communication means 113 and 122). Through this, it is possible to automatically store only the broadcasting of a professional baseball, for example, hereby increasing convenience.

In the above description, furthermore, no reference is made to at which point of time the reproduction of moving picture is started on the side of portable terminal 120, but this point of time when reproduction is started is not restrictive in particular. That is, reproduction may be started after the whole of moving picture B is stored in storage means 123 or reproduction may be started when part of moving picture B (one tenth, for example) is stored in storage means 123 of portable terminal 120.

However, in case a configuration is adopted in which reproduction starts when part of moving picture B is stored in storage means 123 of portable terminal 120, it is desirable to make a conversion according to communication path information instead of the conversion according to the terminal information (or making the conversion according to the terminal information at the same time). Communication path information is information on characteristics or state of the communication path such as communication speed and communication quality level as explained below.

That is, arrangements are so made that communication path information is given from portable terminal 120 to television receiver 110 via communication means 122 and 113. Through this, conversion means 112 of television receiver 110 converts moving picture A so that the number of frames per second becomes 10 frames/sec. when communication path information is received that the communication speed is 64 kbps or so that the number of frames per second become 5 frames /sec. when communication path information is received that the communication speed is 32 kbps.

Through this arrangement, an object frame can be sent to portable terminal 120 irrespective of the communication speed. Arrangements are so made that if the communication speed drops, the number of frames per second will be reduced. But the present invention is not limited to that. That is, arrangements may be so made that if the communication speed drops, the picture quality of moving picture A will be lowered (compression ratio will be raised).

In the present invention, as described, since a configuration is adopted in which a television receiver is interposed, radio wave broadcast can be received with high sensitivity irrespective of the location of the portable terminal.

In the present invention, furthermore, a configuration is adopted in which conversion is made according to terminal information, and therefore there arises no problems that it is only specific portable terminal 120 having specific characteristics that can be adopted. No problems occur, either, that moving pictures can not be normally stored in storage means that the portable terminal has or that the moving picture quality drops because of the difference in resolution of display means the portable terminal has.

In describing the present invention, a television receiver is exemplified, but the apparatus to which the present invention is applicable is not limited to the television receiver. That is, the present invention is applicable to any apparatus that can receive moving picture information and/or sound information, multimedia information and monmedia information by data broadcasting, program information such as script, and mixed information of those etc. by broadcasting or communication.

Also, in the above description, television receiver is provided with storage means 111 of television receiver 110, and a plurality of data can be stored in storage means 111, but the present invention is not limited to that. That is, the present invention may be so configured that data can be sent to portable terminal 120 real-time by using storage means 111 of television receiver 110 as data cash of buffer.

## Claims

1. A receiver which comprises:
conversion means for converting information of a specific form into information of another specific form,
communication means for sending to a portable terminal the information converted by said conversion means and receiving a command information from the portable terminal, and
control means for at least selecting information sent by said communication means on the basis of a command information from the portable terminal received by said communication means.

2. The receiver of claim 1 wherein said communication means receives terminal information on characteristics or state of the portable terminal and said conversion means makes a conversion according to said terminal information.

3. The receiver of claim 2 wherein said terminal information indicates at least one out of the resolution of display means of the portable terminal, the total capacity of storage means of the portable terminal, the available capacity of storage means of the portable terminal, number of colors to be displayed by display means of the portable terminal, and data format adapted for the portable terminal.

4. The receiver of claim 1 wherein said communication means receives communication path information on characteristics or state of a communication path from the portable terminal and said conversion means makes a conversion according to said communication path information.

5. The receiver of claim 4 wherein said communication information indicates at least one out of the communication speed and communication quality level.

6. The receiver of claim 1 which further comprises storage means for storing information of a specific form and sending said stored information to said conversion means.

7. A portable terminal which comprises:
command means for issuing a specific command,
communication means for sending the command information from said command means to the receiver and receiving information from the receiver, and
reproduction means for reproducing the information from the receiver which is received by said communication means, and
display means for displaying the information reproduced by said reproduction means.

8. The portable terminal of claim 7 wherein said communication means sends to the receiver terminal information on the characteristics or state about said portable terminal.

9. The portable terminal of claim 8 wherein said terminal information indicates at least one out of the resolution of display means of said portable terminal, the total capacity of storage means of said portable terminal, the available capacity of storage means of said portable terminal, the number of colors to be displayed by display means of the portable terminal, and data format adapted for the portable terminal.

10. The portable terminal of claim 7 wherein said communication means sends to the receiver communication path information on the characteristics or state about the communication path.

11. The portable terminal of claim 10 wherein said communication path information indicates at least one out of the communication speed and the communication quality level.

12. The portable terminal of claim 7 which further comprises storage means for storing the information received by said communication means and sending the stored information to said reproduction means.

13. A receiving system comprising a receiver and a portable terminal wherein said receiver comprises:
conversion means for converting information of a specific form into information of another specific form,
communication means for sending to the portable terminal the information converted by said conversion means and for receiving command information from the portable terminal, and
control means for at least selecting information sent by said communication means on the basis of the command information received by said communication means from the portable terminal, and
said portable terminal comprises:
command means for issuing a specific command,
communication information for sending to the receiver a command information from said command means and for receiving information from the receiver, and
display means for displaying information reproduced by reproduction means.
